# EUROPEAN PATENT APPLICATION

(11) **EP 3 690 785 A1**
(43) Date of publication of application: **05.08.2020**
(21) Application number: 18896976.0
(22) Date of filing: 21.12.2018
(51) Int. Cl.: G06Q 30/02, G06Q 30/00

(54) **INFORMATION PROCESSING DEVICE**

(30) Priority: 28.12.2017 JP 2017253013
(71) Applicant: NTT DOCOMO, INC., Tokyo 100-6150 (JP)
(72) Inventor: ENDOU, Masamichi, Tokyo 100-6150 (JP)
(74) Representative: Hoffmann Eitle
(86) International application number: PCT/JP2018/047222
(87) International publication number: WO 2019/131499

(57) **Abstract**

User terminal 20 captures an image of a receipt delivered from a store to a user when a product is purchased and an image of the best-before date or the use-by date attached to a packaging container or the like of the product, and transmits data corresponding to the results of capturing the images to server 10, in accordance with an operation performed by the user who purchased the product. Upon confirming, using this data, that the user purchased a product that was close to the expiration date, server 10 provides a reward to the user. The user is provided with a reward if the user purchases a product that is close to the expiration date, and is therefore motivated to purchase this kind of product. As a result, products that are discarded due to being expired, or so-called food loss and waste, can be reduced.

## Description

### Technical Field

The present invention relates to a technology for promoting sales of products that are close to an expiration date related to the consumption thereof, such as a use-by date or a best-before date.

### Background Art

Particularly in developed countries, there have been issues in reducing in the quantity of discarded products that are past the expiration date related to the consumption thereof, such as a use-by date or a best-before date. For example, Patent Literature 1 proposes a mechanism for promoting sales of products that are close to the aforementioned expiration date in supermarkets on a network.

### Citation List

### Patent Document

Patent Document 1: JP 2016-53834A

### Summary of Invention

### Technical Problem

The mechanism described in Patent Literature 1 is merely premised on product sales on a network, and cannot be applied to types of sale that are spread worldwide, such as selling products in physical stores. For this reason, even if this mechanism is used, the effects of promoting sales of products that are close to the expiration date thereof are limited to a certain extent. The present invention has been made in view of this point, and aims to suppress products that are sold in physical stores from reaching the expiration date thereof.

### Solution to Problem

To solve the foregoing problem, the present invention provides an information processing apparatus including: a time-of-purchase acquisition unit configured to acquire a time of purchase of a product purchased by a user; an expiration date acquisition unit configured to acquire an expiration date that is related to consumption of the product and is specified based on image data obtained by capturing an image of the product; and a reward processing unit configured to perform processing for providing a reward to the user if the time of purchase acquired by the time-of-purchase acquisition unit and the expiration date acquired by the expiration date acquisition unit are in a predetermined relationship.

The time-of-purchase acquisition unit may acquire the time of purchase of the product, the time of purchase being specified based on image data including receipt information that indicates identification information regarding the product purchased by the user and the time of purchase.

The reward processing unit may make, to a seller of the product, an inquiry about whether or not a product for which the reward is to be provided was purchased at the time of purchase acquired by the time-of-purchase acquisition unit, and perform processing for providing the reward to the user if the product was purchased at the time of purchase.

The reward processing unit may perform processing for providing the reward to the user if processing for providing the reward is requested before a predetermined period passes from the time of purchase acquired by the time-of-purchase acquisition unit.

The reward processing unit may perform processing for providing the reward to the user if processing for providing the reward is requested before a predetermined period passes from the expiration date acquired by the expiration date acquisition unit.

The reward processing unit may perform processing for providing a reward whose value varies in accordance with a predetermined condition.

The reward processing unit may perform processing for providing a reward whose value changes in accordance with a relationship between an estimated consumption period that is an estimated period to be taken for the user to consume the product from when the user purchased the product, and a period from the time of purchase acquired for the product to the expiration date acquired for the product.

The reward processing unit may notify the user of information related to a product for which the reward is to be provided and the reward.

The reward processing unit may perform processing for providing a reward whose value varies in accordance with a relationship between the time of purchase acquired for the product and the expiration date acquired for this product.

A consumption promoting unit configured to check whether or not the product purchased by the user has been consumed, and performs, if not consumed, processing for promoting consumption of the product may be provided.

### Effects of Invention

According to the present invention, it is possible to suppress products that are sold in physical stores from reaching the expiration date.

### Brief Description of Drawings

FIG. 1 shows an example of a configuration of information processing system 1 according to an embodiment of the present invention.
FIG. 2 is a block diagram showing an example of a hardware configuration of user terminal 20 according to the embodiment.
FIG. 3 is a block diagram showing an example of a hardware configuration of server 10 according to the embodiment.
FIG. 4 shows an example of an application database stored in server 10 according to the embodiment.
FIG. 5 shows an example of a product database stored in server 10 according to the embodiment.
FIG. 6 shows an example of a user database stored in server 10 according to the embodiment.
FIG. 7 is a block diagram showing an example of a functional configuration of server 10 according to the embodiment.
FIG. 8 is a sequence chart showing an example of an operation of information processing system 1.
FIG. 9 shows an example of an estimated use-by period database stored in server 10 according to a modification.

### Reference Signs List

- 1: Information processing system
- 10: Server
- 11: Time-of-purchase acquisition unit
- 12: Expiration date acquisition unit
- 13: Reward processing unit
- 20: User terminal
- 30: Store system
- 90: Network
- 101: CPU
- 102: RAM
- 103: ROM
- 104: Auxiliary storage
- 105: Communication IF
- 201: CPU
- 202: RAM
- 203: ROM
- 204: Auxiliary storage
- 205: Communication IF
- 206: Image capturing unit
- 207: Display unit
- 208: Operation unit

### Description of Embodiments

### Configuration

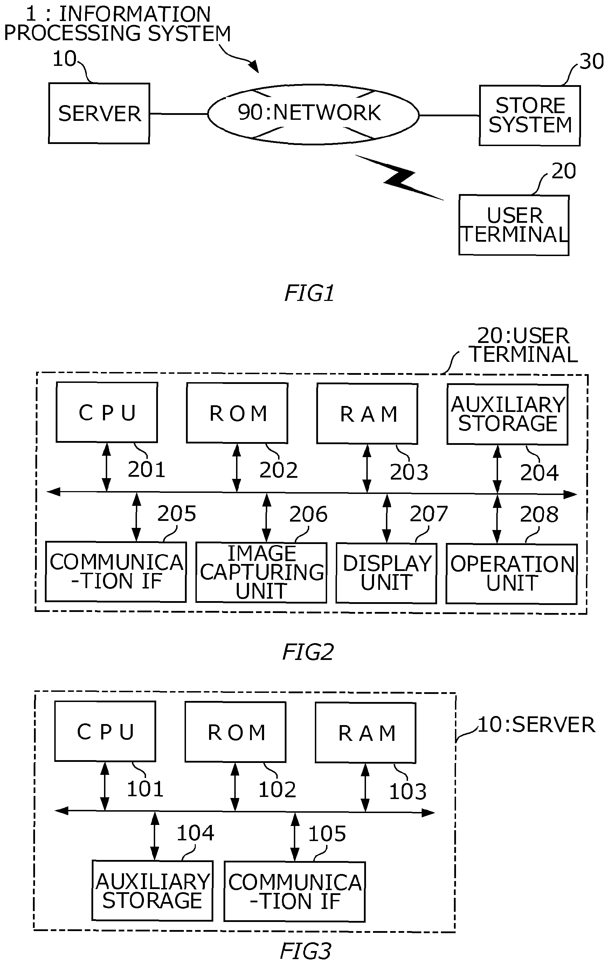

FIG. 1 shows an example of information processing system 1 according to this embodiment. Information processing system 1 includes server 10 serving as an information processing apparatus that suppresses products from reaching the expiration date by promoting sales of products that are close to the best-before date or use-by date, user terminal 20 that is to be used by a user, store system 30 that is installed in a physical store that sells products, and network 90 that connects server 10, user terminal 20, and store system 30. Both server 10 and user terminal 20 are computer devices, and the details thereof will be described later. Store system 30 includes a POS (Point of Sales) system that manages a sales situation in the store for each product, and manages the sales and stock based on the sales situation. Network 90 is, for example, a LAN (Local Area Network), or a WAN (Wide Area Network), or a combination thereof, and includes a wired-connection area or a wireless-connection area. Note that, although Fig. 1 shows one server 10, one user terminal 20, and one store system 30, a plurality of servers 10, user terminals 20, and store systems 30 may be provided.

User terminal 20 captures an image of a receipt delivered to a user by a store when the user purchased a product, and an image of the best-before date or the use-by date (hereinafter referred to simply as an expiration date) attached to a packaging container or the like of the product, and transmits data corresponding to the image-capturing results to server 10, in accordance with an operation performed by the user who purchased the product. Upon confirming, using this data, that the user purchased a product that was close to the expiration date thereof, server 10 provides the user with a certain reward, which is valuable in some way. Since the user is provided with a reward if the user purchases a product that is close to the expiration date thereof, the user is motivated to intentionally purchase such products. Thus, sales of products that are close to the expiration date thereof are promoted, and products that are to be discarded due to being expired, or so-called food loss and waste, can be reduced.

FIG. 2 shows an example of a hardware configuration of user terminal 20. User terminal 20 may be a smartphone, a tablet, or a portable computer such as a camera-type portable computer, or may be a wearable computer such as a glasses-type, head-mounted display type, or contact lens type wearable computer, or may be a personal computer such as a desktop-type or laptop-type computer, for example. User terminal 20 has CPU 201 (Central Processing Unit), ROM (Read Only Memory) 202, RAM (Random Access Memory) 203, auxiliary storage 204, communication IF 205, image capturing unit 206, display unit 207, and operation unit 208.

CPU 201 is a processor that performs various kinds of computation. ROM 202 is a nonvolatile memory in which a program and data to be used to start user terminal 20 are stored, for example. RAM 203 is a volatile memory that functions as a work area when CPU 201 executes a program. Auxiliary storage 204 is a nonvolatile storage such as an HDD (Hard Disk Drive) or an SSD (Solid State Drive), and stores a program and data to be used in user terminal 20. Communication IF 205 is an interface for performing communication via network 90 in accordance with a predetermined communication standard. This communication standard may be a wireless communication standard, or may be a wired communication standard. In the case of wireless communication, communication IF 205 includes an antenna and a communication circuit that operate conforming to LTE (Long Term Evolution), Wi-Fi (registered trademark), or the like, for example. Image capturing unit 206 includes a lens and an optical element, and generates captured-image data that represents a captured image. Display unit 207 includes, for example, a liquid-crystal panel, a liquid-crystal drive circuit, and the like, and displays an image corresponding to the image data. Operation unit 208 includes, for example, operators such as a key and a touch sensor, receives an operation performed by a user, and supplies a signal corresponding to this operation to CPU 201. Note that user terminal 20 may include not only the constituent units shown as an example in FIG. 2, but also other constituent units such as a GPS (Global Positioning System) unit and a sound input-output unit.

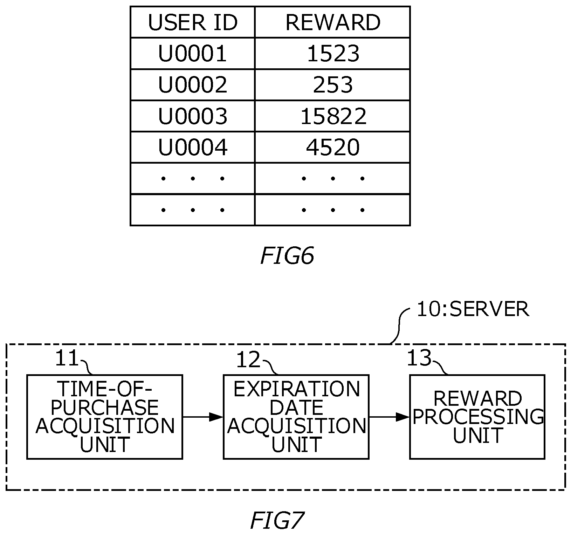

FIG. 3 shows an example of a hardware configuration of server 10, which serves as an information processing apparatus. Server 10 is a computer device that has CPU 101, ROM 102, RAM 103, auxiliary storage 104, and communication IF 105. CPU 101 is a processor that performs various kinds of computation. ROM 102 is a nonvolatile memory in which a program and data to be used to start server 10 are stored, for example. RAM 103 is a volatile memory that functions as a work area when CPU 101 executes a program. Auxiliary storage 104 is a nonvolatile storage such as a HDD or an SSD, and stores a program and data to be used in server 10. Functions shown in FIG. 7, which will be described later, are realized by CPU 101 executing this program. Communication IF 105 is an interface for performing communication via network 90 in accordance with a predetermined communication standard. Server 10 may include not only the constituent units shown as an example in FIG. 3, but also other constituent units such as a display unit and an operation unit.

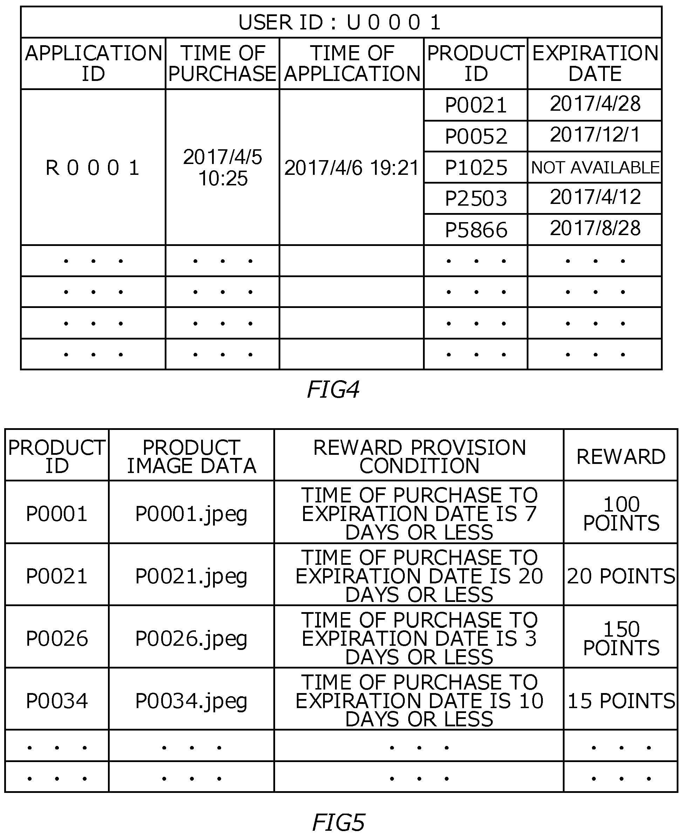

Auxiliary storage 104 stores various databases (hereinafter, a database will be abbreviated as a DB) that are shown as examples in FIGS. 4 to 6. In an application DB, which is shown as an example in FIG. 4, an application ID for identifying a reward provision application action performed by a user, the time of purchase when a product was purchased, the time of application when the user applied for the reward provision, a product ID for identifying the product purchased by the user, and the expiration date of each product are associated with each other for each user ID for identifying users. This product is a product that typically has a short period from the time of manufacturing to the expiration date thereof, such as food or beverage, but may be any product as long as the expiration date related to the consumption of the product has been determined. The product ID may be any kind of ID as long as it is identification information for identifying a product, such as the product name or a character string that is assigned to the product. Note that the minimum unit of information that specifies a time such as the time of purchase, the time of application, and the expiration date of each product may be any unit, such a year, a month, a day, an hour, a minute, or a second. Information included in the application DB is specified based on image data obtained by user terminal 20 capturing images of a product and a receipt.

The receipt mentioned here at least includes the product ID and the time of purchase of a product purchased by a user.

A product DB, which is shown as an example in FIG. 5, includes a product ID of each product that is to be sold to a user and for which a reward is to be provided, product image data that represents an image of the product, a reward provision condition that is to be satisfied when the reward is provided to the user who purchased the product, and the reward. The product image data is data obtained by particularly capturing an image of an area around a portion of a packaging container or the like of a product at which the expiration date is attached. The reward refers to points that can be used as an alternative to money, for example. In the example in FIG. 5, in the case where a user purchased a product with the product ID "P0001", for example, a reward of 100 points is provided to the user if the expiration date is reached in seven days after the purchase date.

A user DB, which is shown as an example in FIG. 6 includes a user ID of each user, and the reward (here, the cumulative total of points) that has been provided to the user.

FIG. 7 is a block diagram showing an example of a functional configuration of server 10. In server 10, functions are realized that are time-of-purchase acquisition unit 11 that acquires the time of purchase of a product purchased by a user, expiration date acquisition unit 12 that acquires the expiration date that is related to the consumption of the product and is specified based on image data obtained by capturing an image of the product, and reward processing unit 13 that performs processing for providing a reward to a user if the time of purchase acquired by the time-of-purchase acquisition unit 11 and the expiration date acquired by the expiration date acquisition unit 12 are in a predetermined relationship. These functions are realized by CPU 101, which serves as hardware, executing a program. The predetermined relationship refers to a relationship that is defined based on whether the remaining time from the point of purchase to the expiration date is longer or shorter than a preset period, for example. The predetermined relationship may include any kind of relationship that can be defined using the timing of purchase and the expiration date. Alternatively, the predetermined relationship may be a relationship that is defined using any other temporal element, such as the manufacturing date, in addition to the purchase date and the expiration date.

Specific content of the functions is as follows. Time-of-purchase acquisition unit 11 acquires the time of purchase of a product that is specified based on the image data obtained by capturing an image of a receipt, which contains the product ID and the time of purchase of the product purchased by the user.

Expiration date acquisition unit 12 acquires the purchased product from the aforementioned product DB (FIG. 5), based on the image data obtained by capturing an image of an area that includes the product itself purchased by the user, or at least includes a portion of a packaging container of the product at which the expiration date is written. Expiration date acquisition unit 12 acquires the expiration date that is related to the consumption of the product and is specified based on the image data.

Reward processing unit 13 specifies the reward that is to be provided to a user, using the aforementioned application DB (FIG. 4) and the product DB (FIG. 5), and writes the specified reward in association with this user's user ID in the user DB (here, adds points). At this time, reward processing unit 13 makes an inquiry about whether the product for which the reward is to be provided was purchased at the time of purchase acquired by time-of-purchase acquisition unit 11, to store system 30 of a seller of the product. Since store system 30 includes a POS system that manages the sales situation at the store product-by-product, store system 30 replies to the inquiry from reward processing unit 13 with whether or not the product was purchased, using sales information recorded in the POS system. If the product was purchased at the aforementioned time, reward processing unit 13 performs processing for providing the reward to the user.

### Operations

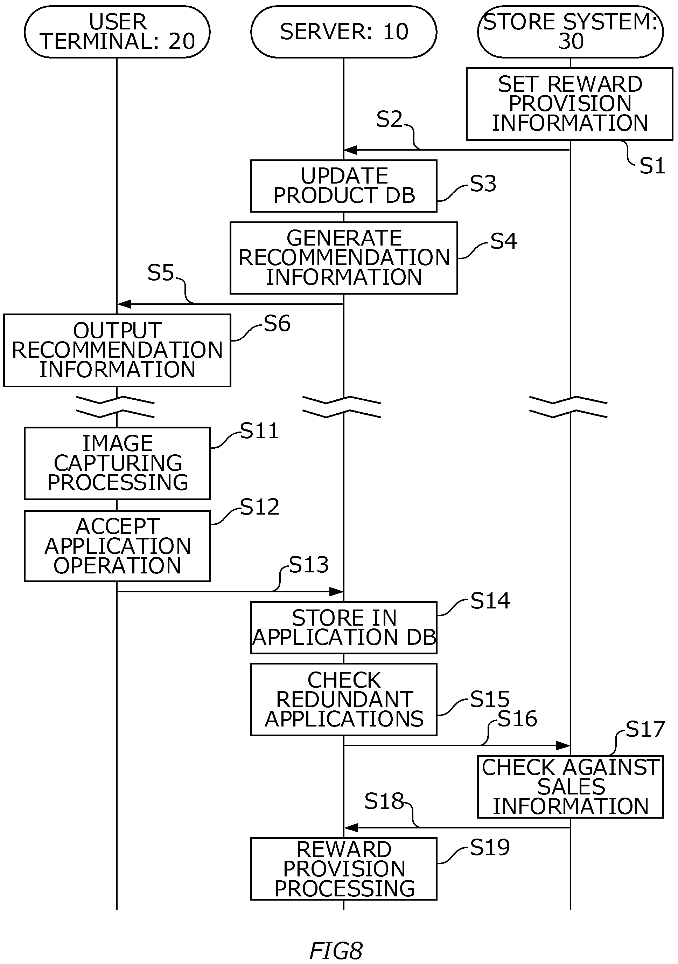

Example operations of information processing system 1 will be described with reference to FIG. 8. Steps S1 to S6 in FIG. 8 show example operations performed until information regarding a product for which a reward is to be provided is recorded in the product DB, and steps S11 to S19 show example operations performed from when a user purchases a product and until when the reward is provided.

First, a description will be given of an example operation performed until information regarding a product for which a reward is to be provided is recorded in the product DB. Store system 30 sets reward provision information in accordance with an operation performed by a store manager, for example (step S1). This reward provision information includes the product ID of a product for which a reward is to be provided, product image data of the product, the content of the reward that is to be provided in accordance with a purchase of the product, and the relationship between the purchase date of the product and the expiration date of the product (reward provision condition). For example, an example is conceivable in which the product ID is "P0001", the product image data is date with a file name "P0001.jpeg", the reward provision condition is that "the expiration date is reached in seven days from the purchase date", and the reward is "100 points". This reward provision information is transmitted from store system 30 to server 10 (step S2). Note that the operation to set the reward provision information is not limited to being performed by not only store system 30, but may alternatively be performed by a computer system such as that of a manufacturer that manufactures products for which a reward is to be provided, for example.

Reward processing unit 13 of server 10 updates the product DB based on the reward provision information received from store system 30 (step S3). For example, reward processing unit 13 writes, in the product DB, the product ID: "P0001", the product image data: "...", the reward: "100 points", and the reward provision condition: "the expiration date is reached in seven days from the purchase date".

Next, reward processing unit 13 of server 10 generates recommendation information for recommending a purchase of a product that is included in the product DB (step S4). This recommendation information includes information related to a product for which a reward is to be provided and the reward thereof, specifically, a description of the product and the content of the reward to be provided, as well as the reward provision condition, and so on. This recommendation information is transmitted from server 10 to user terminal 20, in which an application program dedicated to the service according to this embodiment is installed (step S5). User terminal 20 performs output processing, e.g. displays the received recommendation information on display unit 207, and notifies the user of information regarding the product for which the reward is to be provided (step S6). Thus, the user is notified of the generated recommendation information by reward processing unit 13.

Next, a description will be given of example operations performed from when a user purchases a product until when a reward is provided. If a user sees recommendation information and becomes aware of the presence of the product for which the reward is to be provided, the user purchases the product at a store and receives a receipt from the store. Meanwhile, upon the user finishing payment to purchase the product, store system 30 records sales information including the product ID of this product, the time of purchase, the quantity of purchased products, the purchase price, and so on. After purchasing the product, the user operates user terminal 20 to capture an image of the receipt using the image capturing unit 206, and then, captures an image of an area that at least includes a portion of a packaging container or the like of the product at which the expiration date is written (step S11).

User terminal 20 analyzes the image of the captured image data of the receipt, recognizes characters of a store ID for identifying the store at which the product was purchased, the time when the receipt was issued, a receipt number for identifying the receipt, and the product ID of the purchased product, and stores the recognition results.

Furthermore, user terminal 20 analyzes the image of the captured image data of the product to recognize characters of the expiration date, and stores the recognition results.

These recognition results and product image data are transmitted from user terminal 20 to server 10 (step S13) in accordance with an application operation that is performed by the user to request processing for providing the reward (step S12). Note that image analysis on the receipt image data or the product image data that is performed by user terminal 20 may alternatively be performed by server 10, instead of user terminal 20. In this case, this image data is transmitted from user terminal 20 to server 10 without undergoing image analysis.

Upon receiving the aforementioned recognition results and the product image data from user terminal 20, time-of-purchase acquisition unit 11 and expiration date acquisition unit 12 of server 10 issues a new application ID and registers the recognition results, the product image data, and the issued application ID in the application DB (step S14). At this time, the timing at which these are received by server 10 is acquired as the time of application and is registered in the application DB. The time of purchase serves as the time when the receipt was issued. The product image data received from user terminal 20 undergoes image recognition processing for recognizing shape, color, size, or the like of the product, the packaging container thereof, or the like, and is then checked against product image data in the product DB. It is thus specified which of the products in the product DB is the product for which the reward has been applied. Then, the product ID of the product specified in the product DB is registered as the product ID of the product for which the reward has been applied, in the application DB. Due to this registration in the application DB, the time of purchase of the product purchased by the user is acquired by time-of-purchase acquisition unit 11, and the expiration date that is related to the consumption of this product and is specified based on the image data obtained by capturing the image of the product is acquired by expiration date acquisition unit 12.

Next, reward processing unit 13 of server 10 checks whether or not the content that is newly registered in the application DB has already been registered in the application DB in the past, i.e. whether or not there are redundant applications (step S15). If there are redundant applications, reward processing unit 13 performs processing to reject the aforementioned application.

On the other hand, if there are no redundant applications, reward processing unit 13 transmits an inquiry that includes the content newly registered in the application DB to store system 30 of a store indicated by the store ID (step S16). This is to make an inquiry to the seller of the product, about whether or not the product for which the reward is to be provided was purchased at the time of purchase that is written on the receipt.

Store system 30 checks the information included in the received inquiry against the sales information recorded by the POS system (step S17), and replies to this inquiry (step S18). Specifically, store system 30 determines whether or not the product for which the reward is to be provided was purchased at the time of purchase that is written on the receipt, by checking the content newly registered in the application DB (i.e. the product ID of the product purchased at a certain time of purchase) against the sales information registered in the POS system (i.e. the product ID of the product that was sold at the same time as the aforementioned time of purchase). At this time, store system 30 may check the content newly registered in the application DB against a product that was sold at the same time as the time of purchase included in the inquiry, or against a product that was sold in a period with a certain length that includes the time of purchase included in the inquiry, for example. In this case, if the quantity of purchased products for which the reward is applied for the same period and the same product exceeds the quantity of sold products that is ascertained by store system 30, it means that the group of users who have applied for the reward in this period include a user who committed fraud. The user who commits fraud can be specified by detecting the user ID of the user who is suspicious about repeated fraud. Note that reward processing unit 13 of server 10 may also regularly make an inquiry to store system 30 to acquire and save sales information, and check the content newly registered in the application DB against the saved content.

If it is confirmed that the product for which the reward is to be provided was purchased at the time of purchase that is written on the receipt, reward processing unit 13 performs processing for providing the reward to the user (step S19).

The is to say, reward processing unit 13 specifies the reward that is to be provided to the user, using the application DB and the product DB, and writes this reward in association with the user ID of the aforementioned user in the user DB.

As described above, according to this embodiment, in a type of sales such as selling products at physical stores, a user is provided with a reward if the user purchases a product that is close to the expiration date, and thus, the user is motivated to purchase such a product. As a result, the quantity of products that are discarded due to being expired can be reduced. In addition, since the reward is provided after the purchase is checked against the sales information recorded in store system 30, a fraud by forging a receipt or the like can be suppressed, for example.

### Example Modifications

The present invention is not limited to the above-described embodiment. The above-described embodiment may also be modified as follows. Also, two or more of the following modifications may be carried out in combination.

### Modification 1

The timing at which a user applies for reward provision may be limited to being within a predetermined period (e.g. 24 hours, three days etc.). Specifically, reward processing unit 13 performs processing for providing the reward to the user if processing for providing the reward is requested within a predetermined period from the time of purchase acquired by time-of-purchase acquisition unit 11. By this limiting the timing at which a user applies for a reward, for example, it is possible to suppress a fraud of applying a reward using the expiration date of a product that the user purchased before participating in this reward provision service.

Furthermore, if processing to provide a reward is requested before a predetermined period passes from when the expiration date acquired by expiration date acquisition unit 12, reward processing unit 13 may also perform processing for providing the reward to the user. By limiting the period from when the expiration date is past until when the reward is applied for as well, for example, it is possible to suppress fraudulently applying a reward using the expiration date of a product that was purchased by the user in the pace before participating in this reward provision service.

### Modification 2

Reward processing unit 13 may also perform processing for providing a reward whose value varies in accordance with a predetermined condition. For example, reward processing unit 13 may also perform processing for providing a reward whose value varies in accordance with the relationship between an estimated consumption period that is an estimated period from when a user purchases a product until when the user consumes the product and the period from the time of purchase acquired for this product until the expiration date acquired for the product.

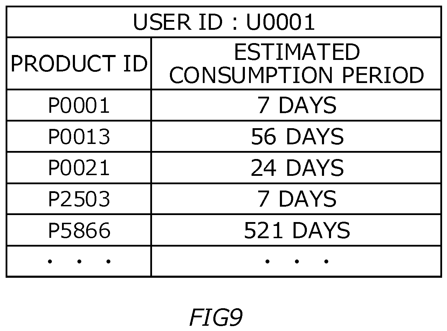

Here, FIG. 9 shows an example of an estimated consumption period DB, which is stored in reward processing unit 13. In this estimated consumption period DB, for each user, the product ID of a product purchased by the user is associated with an estimated value of a period (estimated consumption period) from when the product is purchased until when the consumption of this product is finished. The estimated consumption period is calculated as follows. Upon each user finishing consuming a product, the user notifies server 10 that the user has finished consuming the product, using user terminal 20. This notification includes the product ID of a product that the user has finished consuming. Reward processing unit 13 of server 10 calculates a difference between the time of this notification and the time of purchase of the same product in the application DB, and regards this difference as the estimated consumption period of the product. Also, reward processing unit 13 of server 10 may acquire product purchase history of users recorded in store system 30, obtain a difference between the times of purchase of products in the case where one user purchased the same product a plurality of times, and regard this difference as the estimated consumption period of this product. Every time a user thus purchases or consumes the same product, the estimated consumption period of this product is averaged with respect to the previously-calculated estimated consumption period. If a difference between the estimated consumption period that is thus calculated based on the past purchase or consumption of a certain product and a period from the time of purchase that is newly acquired for this product to the expiration date of the product is within a threshold, reward processing unit 13 performs processing for providing a reward with a higher value than the value of a reward provided when this difference exceeds the threshold. With this configuration, the reward is provided if the product is purchased at an appropriate pace that is estimated based on the past purchase or consumption by the user, but the reward is not provided for a purchase that deviates from this pace. As a result, it is possible to suppress a user's action of unreasonably purchasing an unconsumable quantity of products in order to obtain the reward, for example.

Reward processing unit 13 may also perform processing for providing a reward whose value varies in accordance with the relationship between the time of purchase acquired for a product and the expiration date acquired for this product. Thus, for example, the closer the purchased product is to the expiration date, a reward with a higher value can be provided for the same product. For example, information indicating that, regarding a certain product, 100 points are provided if the product is purchased at least five days before the expiration date, and 300 points are provided if the product is purchased at least a day before the expiration date, is stored in the product DB. As a result, sales of products that are closer to the expiration date can be promoted more intensively.

### Modification 3

Server 10 may also have a consumption promoting unit that checks whether or not a product purchased by a user has been consumed, and performs processing to promote consumption of the product if not consumed. This consumption promoting unit is realized by CPU 101, which serves as hardware, executing a program. Upon a user finishing consuming a product, the user notifies server 10 that the user has finished consuming the product, using user terminal 20. This notification includes the product ID of the product that the user has finished consuming. The consumption promoting unit of server 10 performs processing to promote consumption, e.g. to send information regarding how to consume the product (e.g. if the product is food, a recipe that uses this food) to user terminal 20 at a preset timing that is a predetermined period before the expiration date of the product or a preset timing after the expiration date has been past. Thus, consumption of the product before and after reaching the expiration date can be promoted, and food waste, can be reduced.

### Modification 4

In the embodiment, time-of-purchase acquisition unit 11 acquires the time of purchase of a product based on the image data obtained by capturing an image of a receipt, but the method for acquiring the time of purchase of a product purchased by a user is not limited to the example of the embodiment. Time-of-purchase acquisition unit 11 may alternatively acquire the time of purchase based on product purchase history of each user that is recorded in association with a store member card or the like, for example. This purchase history at least includes the user ID for identifying a user, the product ID of a product purchased by the user, and the time of purchase of this product. The receipt is not limited to one that is printed on a medium such as paper and provided to the user, and may also be one provided as electronic information to the user. The receipt that is thus provided as electronic receipt information is called an electronic receipt or a smart receipt, which is transmitted from store system 30 to user terminal 20 and is displayed on display unit 207 of user terminal 20, for example. Time-of-purchase acquisition unit 11 of server 10 acquire this electronic receipt information from user terminal 20, and acquires the time of purchase of a product based on the content of the electronic receipt information. Specifically, similar to a paper receipt or the like, the electronic receipt information includes the store ID, the time when the receipt was issued, the receipt number for identifying the receipt, and the product ID of the purchased product. Thus, upon receiving this electronic receipt information, time-of-purchase acquisition unit 11 of server 10 issues a new application ID and registers them in the application DB. Thus, in either case of the image data obtained by capturing an image of a receipt printed on a medium such as paper and provided by a user or the electronic receipt information, both are image data that includes identification information representing a product purchased by the user and receipt information that indicates the time of purchase. That is to say, image data that includes receipt information is image data that includes information with which a person who received money or the like as the consideration of a product proves the fact of the receipt of the money, such as image data obtained by capturing an image of a receipt or image data provided as electronic receipt information to a user. Time-of-purchase acquisition unit 11 acquires the time of purchase of a product that is specified based on such image data. That is to say, according to the present invention, in either case of image data obtained by capturing an image of a receipt printed on a medium such as paper and provided to a user or electronic receipt information, the effect of enabling the time of purchase of a product to be determined based on this image data can be achieved.

### Modification 5

In the embodiment, reward processing unit 13 performs processing for providing a reward to a user if the product is purchased at a point that is a predetermined period before the expiration date acquired by expiration date acquisition unit 12, but the point provision condition is not limited thereto. If the acquired time of purchase and the expiration date acquired by expiration date acquisition unit 12 are in a predetermined temporal relationship, reward processing unit 13 can perform processing for providing a reward to a user.

### Modification 6

In the present invention, the expiration date related to the consumption of a product is, for example, information that indicates the date until which the manufacturer guarantees the quality of the product, such as a best-before date or a use-by date. However, the expiration date related to the consumption of a product is not limited thereto, and may be any kind of time that is determined as a temporal limit in consumption or use of the product. Also, any reason for which the expiration date is set, and any name and any type of the expiration date may be employed.

### Modification 7

In this embodiment, recommendation information is distributed at any timing to all user terminals 20 in which a dedicated application program is installed, but the destination to which the recommendation information is distributed and the timing of distribution are not limited to this example. As for the destination to which the recommendation information is distributed, server 10 may specify a user who frequently visits the store based on the past product purchase history of the user in the application DB and information representing the position of user terminal 20 of this user, and transmit, to user terminal 20 of the user, recommendation information regarding a product that can be purchased at this store.

Also, server 10 may also specify a user who frequently purchases a certain product, based on the past product purchase history of the user in the application DB, and transmit recommendation information regarding this product to user terminal 20 of this user. As for the timing of distributing the recommendation information, recommendation information may be distributed to a certain user at a timing at which this user is expected to purchase the product next time, or a predetermined period (e.g. several days) before this timing, giving consideration to the estimated consumption period described in the above modification 2. Thus, server 10 may distribute recommendation information to a user or at a timing that is specified in accordance with an action related to purchase or consumption of the product.

### Other Modifications

The block diagrams used in the description of the above embodiment show blocks in functional units. The block diagrams (configuration units) used in the description of the above embodiment show blocks in functional units. Further, the mechanism for realizing each functional block is not particularly limited. That is to say, each functional block may be realized by one physically and/or logically coupled device, or two or more devices physically and/or logically separated from each other directly and/or indirectly (for example, wired and/or wirelessly) may be coupled, and each functional block realized by a plurality of the devices. For example, at least some of the functions of server 10 may be implemented in user terminal 20. If all of the functions of server 10 are implemented in user terminal 20, user terminal 20 functions as the information processing apparatus according to the present invention.

In short, in the present invention, the following steps need only be performed in an information processing system that has one or more computers; namely, a step of acquiring the time of purchase of a product purchased by a user, a step of acquiring the expiration date that is related to the consumption of the product and is specified based on image data obtained by capturing an image of the product, and, in a case where the acquired time of purchase and the acquired expiration date are in a predetermined relationship, a step of providing a reward to the user.

The modes/embodiments described in the present specification may also be applied to a system that uses LTE (Long Term Evolution), LTE-A (LTE-Advanced), SUPER3G, IMT-Advanced, 4G, 5G, FRA (Future Radio Access), W-CDMA (registered trademark), GSM (registered trademark), CDMA2000, UMB (Ultra Mobile Broadband), IEEE802.11 (Wi-Fi), IEEE802.16 (WiMAX), IEEE802.20, UWB (Ultra-Wide Band), Bluetooth (registered trademark), or other appropriate system, and/or a next-generation system that is extended based on such a system.

The orders in the processing procedures, sequences, flowcharts, and the like of the aspects/embodiments described in the present description may be changed as long as no contradictions arise. For example, the methods explained in the present description show various step elements in an exemplified order, and are not limited to the order of acquisition that is shown.

The aspects/embodiments described in the present description may also be used alone or in combination, or may also be switched when they are implemented. Furthermore, the notification of predetermined information (e.g., notification of "being X") is not limited to being performed explicitly, and may also be performed implicitly (for example, notification of the predetermined information is not performed).

The terms "system" and "network" used in the present description can be used in an interchangeable manner.

The information and the parameters described in the present description may also be expressed by absolute values, relative values with respect to a predetermined value, or another type of corresponding information. For example, a radio resource may also be one indicated by an index.

The names used for the above-described parameters are in no way limiting. Furthermore, there may be a case where formulae and the like using these parameters are different from those explicitly disclosed in the present description. Various channels (such as, for example, a PUCCH and a PDCCH) and information elements (such as, for example, a TPC) can be identified by any suitable name, and thus various names assigned to these various channels and information elements are no way limiting.

The term "determining" used in the present description may include various types of operations. The term "determining" can include a case where judging, calculating, computing, processing, deriving, investigating, looking up (for example, looking up a table, a data base, or another data structure), or ascertaining is regarded as "determining". Furthermore, the term "determining" can include a case where receiving (for example, receiving information), transmitting (for example, transmitting information), inputting, outputting, or accessing (for example, accessing data in the memory) is regarded as "determining". Furthermore, the term "determining" can include a case where resolving, selecting, choosing, establishing, or comparing is regarded as "determining". In other words, the term "determining" can include a case where some operation is regarded as "determining".

The present invention may be provided as an information processing method that includes the processing steps performed in server 10 or information processing system 1. Also, the present invention may be provided as a program for execution in server 10 or user terminal 20. This program may be provided in an aspect of being recorded on a recording medium such as an optical disk, or may be provided in an aspect of being downloaded to a computer via a network such as the Internet and being installed in the computer to become usable, for example.

Software, instructions, and the like may also be transmitted/received via a transmission medium. For example, if software is transmitted from a web site, a server, or another remote source using a wired technology such as a coaxial cable, an optical fiber cable, a twisted-pair wire, or a digital subscriber line (DSL), and/or a wireless technology using infrared light, radio waves, microwaves, or the like, the definition of the transmission medium will include at least one of the wired technology and the wireless technology.

Information, signals, and the like described in the present description may also be expressed using any of various different technologies. For example, data, an instruction, a command, information, a signal, a bit, a symbol, a chip, and the like that may be mentioned throughout the entire description above may also be expressed by an electric voltage, an electric current, an electromagnetic wave, a magnetic field or a magnetic particle, an optical field or a photon, or an arbitrary combination thereof.

Note that the terms described in the present description and/or the terms needed for understanding the present description may also be replaced by terms that have the same or similar meaning. For example, a channel and/or a symbol may also be a signal. Furthermore, a signal may also be a message. Furthermore, a component carrier (CC) may also be referred to as a carrier frequency, a cell, or the like.

All references to elements that have been given names such as "first" and "second" in the present description do not overall limit the number of such elements or the orders thereof. Such names may be used in the present description as a convenient method for distinguishing between two or more elements. Accordingly, references to first and second elements are not intended to mean that only two elements can be employed, or that the first element is required to come before the second element in some sort of manner.

The "means" in the configurations of the above-described apparatuses may be replaced by "unit", "circuit", "device", or the like.

The terms "including", "comprising", and other forms thereof are intended to be comprehensive as long as they are used in the present description or the claims, similar to the term "being provided with". Furthermore, the term "or" used in the present description or the claims is intended not to be exclusive OR.

In the entirety of the present disclosure, when articles are added through translation, for example, as "a", "an", and "the" in English, these articles also denote the plural form unless it is clear otherwise from the context.

While the present invention has been described in detail, it would be obvious to those skilled in the art that the present invention is not limited to the embodiments explained in the present description. The present invention can be implemented as corrected and modified aspects without departing from the spirit and scope of the present invention that are defined by the description of the claims. Accordingly, the present description aims to illustrate examples and is not intended to restrict the present invention in any way.

## Claims

1. An information processing apparatus comprising:
a time-of-purchase acquisition unit configured to acquire a time of purchase of a product purchased by a user;
an expiration date acquisition unit configured to acquire an expiration date that is related to consumption of the product and is specified based on image data obtained by capturing an image of the product; and
a reward processing unit configured to perform processing for providing a reward to the user if the time of purchase acquired by the time-of-purchase acquisition unit and the expiration date acquired by the expiration date acquisition unit are in a predetermined relationship.

2. The information processing apparatus according to claim 1,
wherein the time-of-purchase acquisition unit acquires the time of purchase of the product, the time of purchase being specified based on image data including receipt information that indicates identification information regarding the product purchased by the user and the time of purchase.

3. The information processing apparatus according to claim 1 or 2,
wherein the reward processing unit makes, to a seller of the product, an inquiry about whether or not a product for which the reward is to be provided was purchased at the time of purchase acquired by the time-of-purchase acquisition unit, and performs processing for providing the reward to the user if the product was purchased at the time of purchase.

4. The information processing apparatus according to any one of claims 1 to 3,
wherein the reward processing unit performs processing for providing the reward to the user if processing for providing the reward is requested before a predetermined period passes from the time of purchase acquired by the time-of-purchase acquisition unit.

5. The information processing apparatus according to any one of claims 1 to 4,
wherein the reward processing unit performs processing for providing the reward to the user if processing for providing the reward is requested before a predetermined period passes from the expiration date acquired by the expiration date acquisition unit.

6. The information processing apparatus according to any one of claims 1 to 5,
wherein the reward processing unit performs processing for providing a reward whose value varies in accordance with a predetermined condition.

7. The information processing apparatus according to claim 6,
wherein the reward processing unit performs processing for providing a reward whose value changes in accordance with a relationship between an estimated consumption period that is an estimated period to be taken for the user to consume the product from when the user purchased the product, and a period from the time of purchase acquired for the product to the expiration date acquired for the product.

8. The information processing apparatus according to any one of claims 1 to 7,
wherein the reward processing unit notifies the user of information related to a product for which the reward is to be provided and the reward.

9. The information processing apparatus according to claim 6,
wherein the reward processing unit performs processing for providing a reward whose value varies in accordance with a relationship between the time of purchase acquired for the product and the expiration date acquired for this product.

10. The information processing apparatus according to any one of claims 1 to 9, further comprising
a consumption promoting unit configured to check whether or not the product purchased by the user has been consumed, and performs, if not consumed, processing for promoting consumption of the product.
